# EUROPEAN PATENT APPLICATION

(11) **EP 1 274 194 A1**
(43) Date of publication of application: **08.01.2003**
(21) Application number: 02014433.3
(22) Date of filing: 28.06.2002
(51) Int. Cl.: H04L 9/08, H04L 12/56

(54) **Method and apparatus for wireless data communication, using an encryption unit**

(30) Priority: 05.07.2001 JP 2001204889
(71) Applicant: Kabushiki Kaisha Toshiba, Tokyo (JP)
(72) Inventor: Kinoshita, Katsuhiro, 1-chome, Minato-ku, Tokyo 105-8001 (JP)
(74) Representative: Henkel, Feiler, Hänzel

(57) **Abstract**

A wireless data communication device for performing a short-distance wireless data communication. The device comprises an infrared communication section, a CPU, a memory, an encryption/ decryption unit, and a wireless communication section. The infrared communication section exchanges shared key data with a station that is another party of wireless data communication. The key data is required in identifying the station and encrypting data to be transmitted to the station. The CPU stores the shared key data into the memory. The key data is read from the memory. Using the key data, the encryption/decryption unit encrypts and decrypts data. The wireless communication section receives the data encrypted by the encryption/decryption unit and transmits it to external apparatuses.

## Description

The present invention relates to a wireless communication apparatus. More particularly, the invention relates to security techniques in short-distance wireless communication systems.

In recent years, techniques have been developed, which use, for example, a short-distance wireless communication system known as "Bluetooth," to accomplish data communication between various electronic apparatuses. Among these electronic apparatuses are personal computers, portable data terminals called "PDAs" (Personal Digital Assistants), cellular telephones (i.e., mobile telephones), portable audio apparatuses and digital cameras.

If wireless communication between these electronic apparatuses is possible, it will be unnecessary to use cables to connect the electronic apparatuses, rendering it easier to use these apparatus. Various devices have been developed to realize wireless communication between the electronic apparatuses. Among these devices are: IC cards and wireless communication devices. IC cards can be connected to and removed from the electronic apparatuses. Each wireless communication device incorporates a chip set (i.e., IC circuit module).

Security is important to wireless communication, to protect the data exchanged between any stations (e.g., at least two electronic apparatuses comprising a wireless communication device). It is proposed that two security functions be standardized in, for example, the Bluetooth system. One security function is data-identification function. The other security function is data-encrypting function (including data-decrypting function). Either security function employs a system called "shared-key system." In the shared-key system, key data is exchanged between the stations. Namely, the shared-key system is a security system in which any calling station uses the key data to identify the called station before connected to the called station and to encrypt the data to protect the data from a third party, before transmitting the data to the called station. In the shared-key system, the calling station and called station share (or exchange) the key data to identify each other and encrypt data before sending it to each other.

In the Bluetooth system, the security function is managed on the basis of a concept known as "link key." The link key is parameter information that achieves security on the data transmitted between specific communication terminals. The link key is registered in a database and utilized whenever necessary. The degree of secrecy of the link key (i.e., key data) greatly influences the reliability of the security function. In short, the key data must be fully protected from any third party before the start of wireless communication. In the conventional systems, however, the degree of secrecy of the key data cannot be as high as desired, because the stations exchange the key data by radio.

An object of the present invention is to provide a wireless communication apparatus that can sufficiently maintain the secrecy of the key data, thereby to enhance the security function of shared-key systems.

According to one aspect of the present invention, there is provided a wireless communication apparatus including an encryption unit that accomplishes various security functions. The apparatus comprises:
an encryption device which encrypts data; a wireless communication device which receives and transmits encrypted data from and to a station that is an other part of wireless communication; and a key-data communication device which exchanges key data with the station, the key data being data required in encrypting data in the encryption device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a wireless communication apparatus according to an embodiment of this invention, and an external wireless communication system;
FIG. 2 is a flowchart explaining how the wireless communication system is connected by radio to the external wireless communication system;
FIG. 3 is a flowchart depicting how the wireless communication system operates in the security function mode;
FIG. 4 is a flowchart explaining how the data communication system operates in conjunction with the wireless communication apparatus;
FIG. 5 is a block diagram illustrating a modification of the wireless communication apparatus;
FIG. 6 is a flowchart explaining how the modified wireless communication apparatus is connected to another wireless communication apparatus; and
FIG. 7 is a timing chart illustrating the method of connecting the modified wireless communication apparatus to the wireless communication apparatus.

Embodiments of the present invention will be described with reference to the accompanying drawings.

### (Configuration the Apparatus)

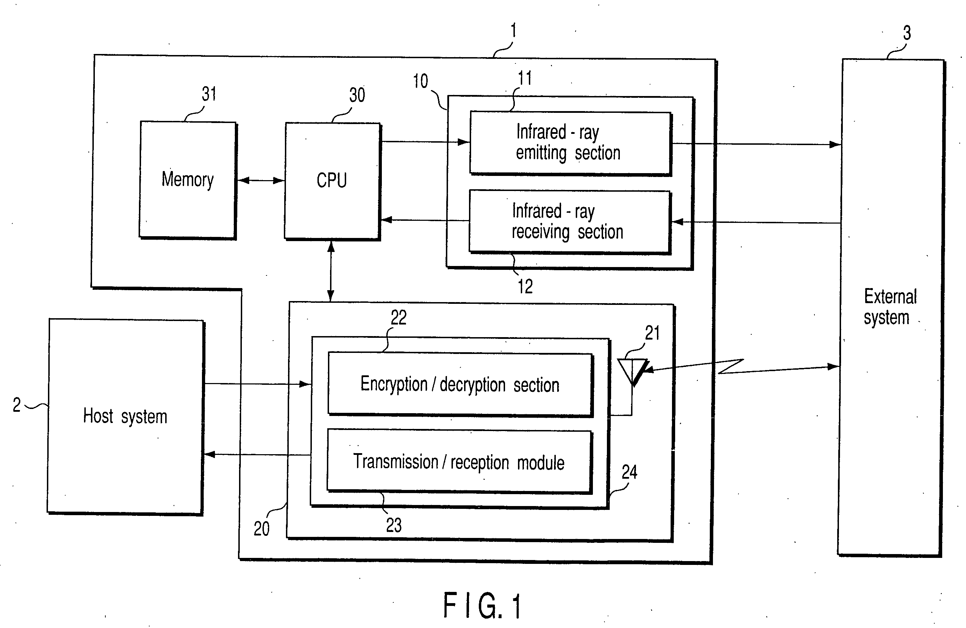

FIG. 1 shows a wireless communication apparatus according to an embodiment of the present invention, and an external wireless communication apparatus 3.

The wireless communication apparatus comprises a wireless communication device 1 and a host system 2. The wireless communication device 1 is an IC card that can be inserted into, and removed from, the host system 2. Alternatively, the device 1 may be a chip-set IC (circuit module) that is incorporated in the host system 2. The host system 2 is a portable data terminal such as a PDA or an electronic apparatus such as a personal computer.

The host system 2 performs data communication with the external wireless communication system 3 (hereinafter referred to as "station 3"). The external station 3 is an electronic apparatus that has a device of the same specification as the wireless communication device 1.

The device 1 comprises an infrared communication section 10 and a wireless communication section 20, i.e., the main component of the device 1. The infrared-ray communication section 10 is a module that performs infrared data communication of the IrDA (Infrared Data Association) Standard. The section 10 comprises an infrared-ray emitting section 11 and an infrared-ray receiving section 12.

The device 1 further comprises a wireless communication section 20, a microprocessor (CPU) 30, and a memory 31. The section 20, CPU 30 and memory 31 are modules that achieve short-distance wireless communication utilizing, for example, a Bluetooth (trademark) system.

The wireless communication section 20 has an antenna 21, an encryption/decryption unit 22, and a transmission/reception module 23. The transmission/reception module 23 includes a wireless communication controller, a high-frequency process section, a base-band process section, an I/O process section, and the like. The encryption/decryption unit 22 is a module that uses the key data (link key) of the Bluetooth system, to encrypt the data to transmit and decrypt the data received.

The CPU 30 controls the data communication and security process that the Bluetooth system carries out. The memory 31 is, for example, a flash EEROM that store the key data (link key) that is used in the security process.

### (Operation of the Apparatus)

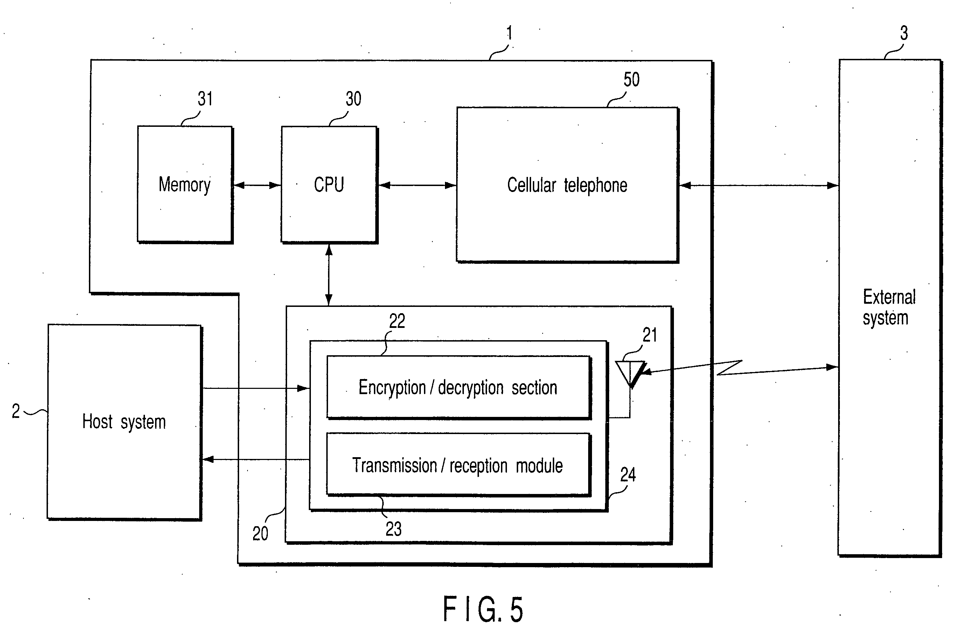

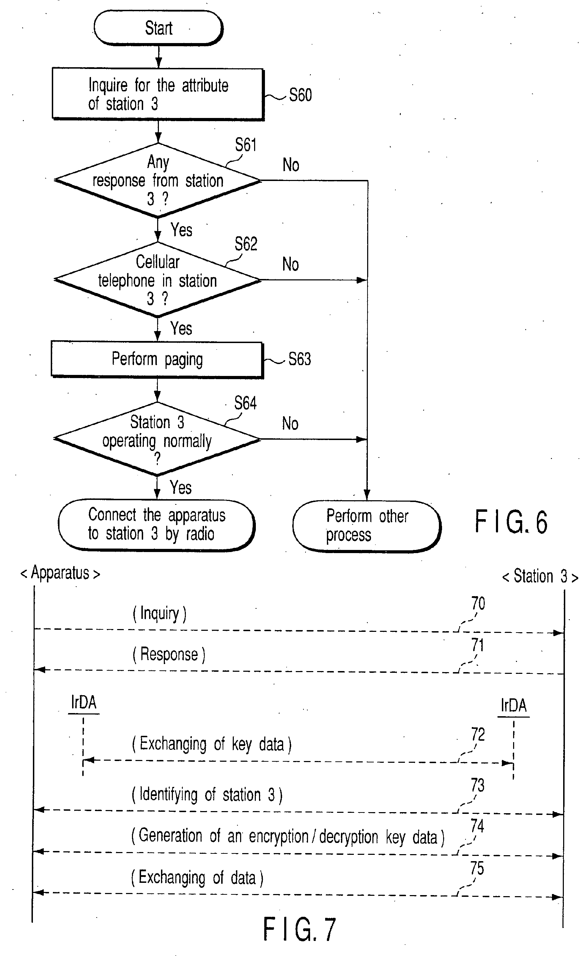

How the wireless communication device 1 generates key data necessary for identifying the station 3 and encrypting and decrypting data, from the key data received from the station 3. apparatus shown in FIG. 1 operates will be described, with reference to the flow chart of FIG. 4 and the timing chart of FIG. 7.

The host system 2 gives instructions to the CPU 30. In accordance with the instructions the CPU 30 activates the wireless communication section 20. The section 20 performs a sequence of operations (described later) to achieve the data communication between itself and the station 3 (Step S21). More precisely, the antenna 21 and module 23 of the section 20 cooperate to receive information from the station 3. From the information the CPU 30 determines whether the external station 3 has a communication means which is equivalent to the infrared-ray communication section 10 and which is indispensable to the exchange of the key data (Step S22).

As FIG. 7 shows, the CPU 30 inquires whether the station 3 has a communication function that is equivalent to the infrared-ray communication section 10 (Operation 70). If the CPU 30 receives a response from the station 3, it determines that the station 3 has such a communication function (Operation 71).

The CPU 30 supplies key data to the station 3 via the infrared-ray emitting section 11 and receives key data from the station 3 via the infrared-ray receiving section 12. Thus, the CPU 30 and the station 30 exchange key data items (i.e., link keys to be described later) (Step S23, Operation 72). The CPU 30 stores the key data it has received, into the memory 31 (i.e., database) (Step S24).

The CPU 30 reads the key data from the memory 31 when it receives a data-transmission request from the host system 2. The CPU 30 then transfers the key data to the encryption/decryption unit 22. The encryption/decryption unit 22 uses the key data, encrypting the data transmitted from the host system 2. The data encrypted is supplied from the unit 22 to the transmission/reception module 23 (Step S25).

As FIG. 7 shows, the wireless communication apparatus identifies the station 3 (Operation 73) and generates key data for encrypting and decrypting data (Operation 74), using the key data received from the station 3. Meanwhile, the station 3 identifies the wireless communication apparatus (Operation 73) and generates key data for encrypting and decrypting data (Operation 74), using the key data received from the wireless communication apparatus.

Using the key data generated, the encryption/decryption unit 22 encrypts the data to be transmitted to the station 3 and decrypts the data received from the station 3 (Operation 75). Similarly, using the key data generated in it, the station 3 encrypts the data to be transmitted to the wireless communication apparatus and decrypts the data received from the apparatus (Operation 75). The transmission/reception module 23 supplies the data encrypted by the unit 22 to the antenna 21, which transmits the data to the station 3 (Step 25). Using the key data, the encryption/decryption unit 22 decrypts the data it has received from the station 3 via the transmission/reception module 23. The data decrypted by the unit 22 is transferred to the host system 2 (Step S25).

### (Data Communication with a Security Function)

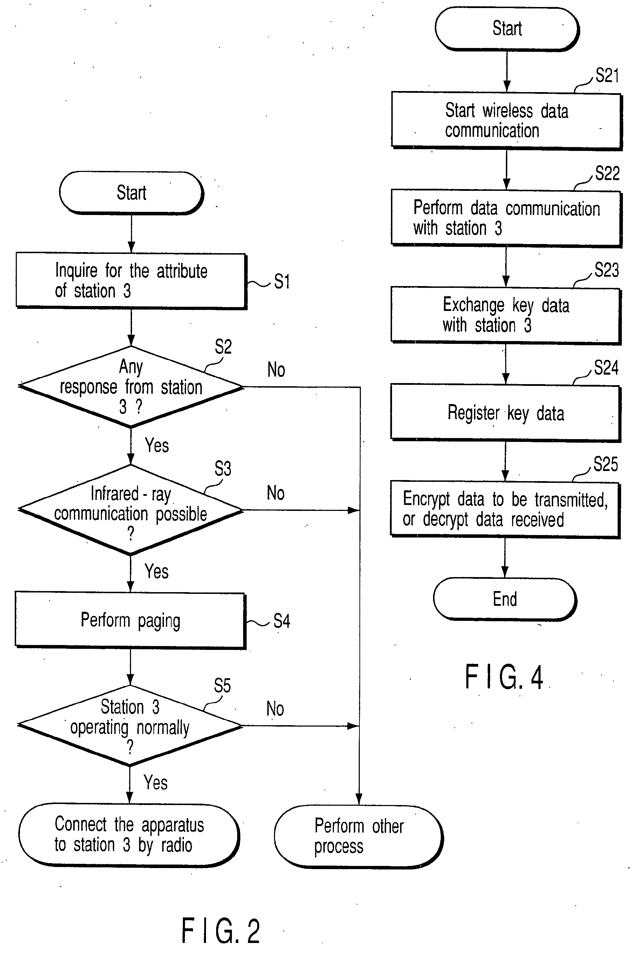

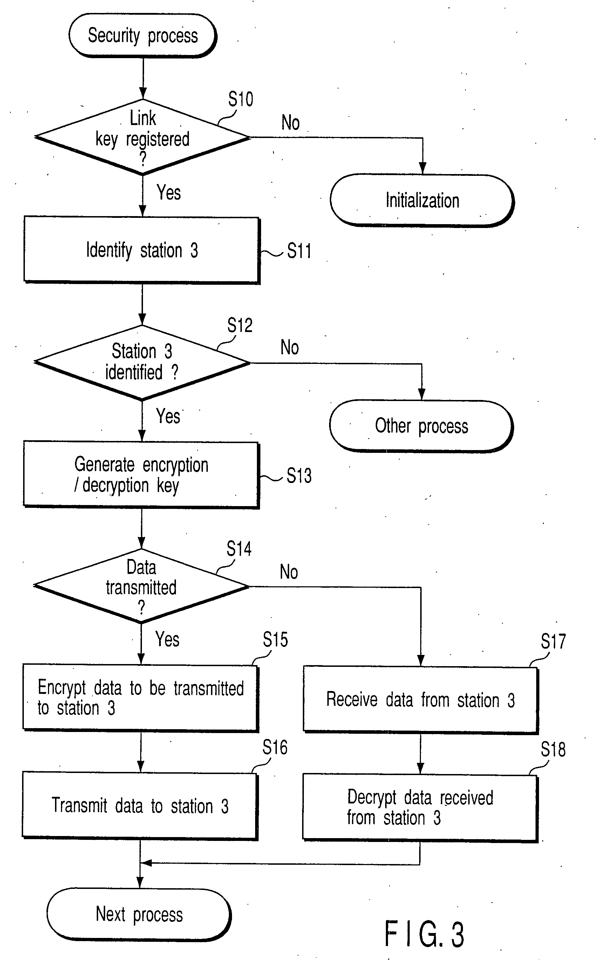

How the wireless communication device 1 performs data communication and a security process by using, for example, the Bluetooth system will be described, with reference to the flowcharts of FIG. 2 and 3.

In the security process of the Bluetooth system, a station uses a link key (key data), identify the calling station, in response to the link request transmitted from the calling station. If the station uses the link key again, generating key data necessary for encrypting the data to be transmitted to the calling station and decrypting the data received from the calling station (see the flowchart of FIG. 3).

In the embodiment of this invention, the CPU 30 exchanges the key data with the station 3 through the infrared-ray communication section 10. First, the CPU 30 makes an SDP (Service Discovery Protocol)-service search request defined by the Bluetooth standard, determining whether the station 3 has a communication unit that corresponds to the infrared-ray communication section 10 (Step S1).

To be more specific, the CPU 30 generates an SDP-service search request. The SDP-service search request is transmitted to the station 3 via the transmission/reception module 23 and antenna 21 of the wireless communication section 20. The CPU 30 then waits for a response from the station 3 (Step S2). If the station 3 receives the SDP-service search request, it transmits a packet (SDP-service search response) to the wireless communication apparatus. The packet indicates whether the station 3 has a communication unit corresponding to the infrared-ray communication section 10. From the packet the CPU 30 determines whether communication with the station 3 is possible via the infrared-ray communication section 10 (Step S3). If YES at Step S3, the CPU 30 performs paging through the infrared-ray emitting section 11 and the apparatus can perform data communication with the station 3 (Step S4). More accurately, the CPU 30 transmits an ID packet to the station 3 and determines whether the station 3 is operating normally (Step S5). If YES in Step S5, that is, if the CPU 30 receives a page response from the station 3 via the infrared-ray receiving section 12, it will operate so that the apparatus may perform data communication with the station 3.

Thus, the CPU 30 enables the apparatus to perform data communication with the station 3, by transmitting requests to the station 3 and receiving responses from the station 3. The apparatus and the station exchange key data required in the security process. In the apparatus, the memory 31 stores the key data (see the flowchart of FIG. 4).

It will be described how the apparatus of FIG. 1 carries out the security process, with reference to the flowchart of FIG. 3.

In the security process of the Bluetooth system, it is determined whether a link key has been registered (Step S10). Note that the memory 31 stores the key data that the infrared-ray communication section 10 has received from the station 31. Hence, the CPU 30 uses the key data as a link key that may otherwise be registered in a database.

At the start of the ordinary security process of the Bluetooth system, the link key is not registered in the database. The decision made at Step S10 is therefore NO. Hence, a provisional link key known as "initial key" is used to identify the station 3. The initial key has been generated from parameters, i.e., the PIN code input to the apparatus (electronic apparatus) and the random-number data generated in the apparatus. The random-number data is transmitted to the station 3, whereby the apparatus and the station 3 use the same random-number data.

The CPU 30 reads the shared key data from the memory 31. The CPU 30 uses this key data as the link key registered in the database, to identify the station 3 (Step S11). Upon identifying the station 3, the CPU 30 generates encryption/decryption key data from the link key data (i.e., shared key data). The encryption/decryption key data is supplied to the encryption/decryption unit 22 (Step S13).

Upon receipt of a data-transmission request from the host system 2, the encryption/decryption unit 22 encrypts the data transmitted from the host system, using the encryption/decryption key data supplied from the CPU 30 (Step S15 if YES in Step S14). The transmission/reception module 23 outputs the data encrypted, which is transmitted to the station 3 (Step S16).

When the transmission/reception module 23 receives data from the station 3, it supplies the data to the encryption/decryption unit 22. The unit 22 decrypts the data, using the encryption/decryption key data (Steps S17 and S18). The data encrypted is transferred from the encryption/decryption unit 22 to the host system 2.

In the wireless communication system shown in FIG. 1, the infrared-ray communication section 10 exchanges key data (i.e., link key) with the station 3. The wireless communication device 1 uses the key data, performing the security process before carrying out data communication with the station 3. The key data is received and transmitted from and to the station 3 by a section other than the section that receives and transmits ordinary data from and to the station 3. In other words, the wireless communication device 1 comprises two communication sections one for exchanging ordinary data with the station 3, and the other for exchanging the key data required in the security process.

The key data being transmitted can therefore be protected much more reliably than is possible with wireless communication devices that have only a section equivalent to the wireless communication section 20. The key data shared by the wireless communication device 1 and the station 3 increases the effectiveness of the security function. This ultimately enhances the reliability of the data communication between the device 1 and the station 3.

### (Modified Embodiment)

A modification of the embodiment described above will be described, with reference to FIGS. 5 and 6.

The modification is a wireless communication apparatus. As FIG. 5 shows, the apparatus comprises a wireless communication device 1 and a host system 2. The device 1 comprises a cellular telephone 50 (i.e., mobile telephone) as a key-data exchanging section. In short, the device 1 differs from the device 1 of FIG. 1 in that cellular telephone 50 is used in place of the infrared-ray communication section 10 (FIG. 1).

The wireless communication device 1 shown in FIG. 5 is identical to the embodiment (FIG. 1) in terms of basic operation, though it differs in that the cellular telephone 50 is used instead of the infrared-ray communication section 10. As the flowchart of FIG. 6 shows, the CPU 30 makes an SDP-service search request defined via the cellular telephone 50, determining whether the station 3 has a communication unit that corresponds to the cellular telephone 50 (Step S60). The CPU 30 then waits for a response from the station 3 (Step S61). In response to the SDP-service search request, the station 3 transmits a packet to the wireless communication apparatus. The packet indicates whether the station 3 has a communication unit corresponding to the cellular telephone 50. From the packet the CPU 30 determines whether communication with the station 3 is possible via the cellular telephone 50 (Step S62). If YES at Step S62, the CPU 30 performs paging through the cellular telephone 50, and the apparatus can perform data communication with the station 3 (Step S63). More specifically, the CPU 30 transmits an ID packet to the station 3 and determines whether the station 3 is operating normally (Step S64). If YES in Step S64, that is, if the CPU 30 receives a page response from the station 3 via the infrared-ray receiving section 12, it will operate so that the apparatus may perform data communication with the station 3.

All components of the modification shown in FIG. 5, but the cellular telephone 50, perform the same functions as the components designated at the same reference numerals in FIG. 1. The sequence of the security process performed in the modification is identical to the sequence illustrated in the flowchart of FIG. 3.

In the embodiment and the modification thereof, both described above, the wireless communication device 1 exchanges the key data with the station 3, said key data being parameter information required to achieve a security function of a shared-key system. The key data being transmitted can therefore remain in a high degree of secrecy. The key data shared by the wireless communication device 1 and the station 3 increases the effectiveness of the security function. This ultimately enhances the reliability of the data communication between the device 1 and the station 3.

## Claims

1. An apparatus for performing wireless data communication, **characterized by** comprising:
an encryption device (22) which encrypts data;
a wireless communication device (20) which receives and transmits encrypted data from and to a station (3) that is an other part of wireless communication; and
a key-data communication device (10) which exchanges key data with the station (3), said key data being data required in encrypting data in the encryption device (22).

2. An apparatus according to claim 1, **characterized in that** the key-data communication device (10) is an infrared communication device which performs data communication by using infrared rays.

3. An apparatus according to claim 1, **characterized by** further comprising a control device (23) which performs a sequence of connecting the wireless communication device (20) to the station (3).

4. An apparatus according to claim 1, **characterized by** further comprising a device (30) which registers the key data that the key-data communication device has exchanged with the station and which identifies the station by using the key data.

5. An apparatus according to claim 1, **characterized in that** the key-data communication device (10) performs data communication different from the data communication performed by the wireless communication device (20).

6. A circuit module for use in a digital device, **characterized by** comprising:
an encryption module (22) which encrypts data processed by the digital device;
a wireless data communication module (20) which receives and transmits encrypted data from and to a station (3) that is another party of wireless data communication; and
a key-data communication module (10) which exchanges key data with the station (3), said key data being data required in encrypting data in the encryption device (22).

7. A circuit module according to claim 6, **characterized in that** the key-data communication module (10) is an infrared communication module.

8. A circuit module according to claim 6, **characterized in that** the key-data communication module (10) is a cellular telephone module.

9. An circuit module according to claim 6, **characterized by** further comprising a housing which is shaped like a card and configured to be inserted and removed into and from the digital device.

10. A circuit module according to claim 6, **characterized by** further comprising a module (31) which registers the key data that the key-data communication module (10) has exchanged with the station and which identifies the station by using the key data.

11. A method of performing wireless data communication in a data communication system,
**characterized by** comprising:
exchanging key data with a station by means of an infrared communication device, said key data being data required in encrypting data;
encrypting data by using the key data; and
transmitting and receiving the data encrypted, by means of a wireless communication device.

12. A method according to claim 11, **characterized by** further comprising:
causing the wireless data communication device to perform a sequence of connecting the wireless communication device to the station; and
registering the key data that the key-data communication device has exchanged with the station and identifying the station by using the key data.
